# EUROPÄISCHE PATENTSCHRIFT

(11) **EP 3 888 950 B1**
(45) Veröffentlichungstag und Bekanntmachung des Hinweises auf die Patenterteilung: **05.07.2023**
(21) Anmeldenummer: 20211235.5
(22) Anmeldetag: 02.12.2020
(51) Int. Cl.: B60C 11/12, B60C 11/03

(54) **FAHRZEUGLUFTREIFEN**
PNEUMATIC TYRE
PNEUMATIQUE DE VÉHICULE

(30) Priorität: 30.03.2020 DE 102020204071
(43) Veröffentlichungstag der Anmeldung: 06.10.2021
(73) Patentinhaber: Continental Reifen Deutschland GmbH, 30165 Hannover (DE)
(72) Erfinder: Henze, Eugen, 30419 Hannover (DE); Özüduru, Ahmet, 30419 Hannover (DE); Pagac, Lubomir, 30419 Hannover (DE); Heide, Thorsten, 30419 Hannover (DE)
(74) Vertreter: Continental Corporation

(56) Entgegenhaltungen:
- EP-B1- 2 281 698
- WO-A1-2014/048635
- JP-A- 2016 132 358

## Beschreibung

Die Erfindung betrifft einen Fahrzeugluftreifen in Radialbauart mit einem Laufstreifen mit zumindest einer von einer Umfangsrille begrenzten schulterseitigen Profilrippe, welche innerhalb der Bodenaufstandsfläche eine Breite besitzt und in welcher parallel zueinander verlaufende, eine Breite von 0,60 mm bis 1,20 mm aufweisende Quereinschnitte angeordnet sind, welche sich unter einem Winkel von höchstens 30° zur axialen Richtung erstrecken und laufstreifeninnenseitig innerhalb der Profilrippe in einem Abstand vor der Umfangsrille, welcher Abstand 15 % bis 35% der Breite der Profilrippe beträgt, enden.

Ein derartiger Fahrzeugluftreifen ist beispielsweise aus der EP 2 281 698 B1 bekannt. Der Laufstreifen dieses Reifens weist schulterseitig jeweils eine Profilrippe auf, welche mit Quereinschnitten, die vom seitlichen Rand des Laufstreifens ausgehen, innerhalb der Profilrippe enden und eine Breite von 0,5 mm bis 1,5 mm aufweisen, versehen sind. Die Enden der Quereinschnitte sind durch eine in Umfangsrichtung gerade umlaufende Rille, die eine Breite von 1,5 mm bis 3,2 mm aufweist, miteinander verbunden. Zwischen dieser und der die Profilrippe seitlich begrenzten Profilrippe befindet sich ein unstrukturierter Profilrippenstreifen, mit einer axialen Breite von 18 % bis 34 % der axialen Breite der Profilrippe. Durch diese Ausgestaltung soll die schulterseitige Profilrippe eine gleichmäßige Steifigkeitsverteilung sowohl in Umfangs- als auch in axialer Richtung aufweisen.

Der Erfindung liegt die Aufgabe zugrunde, einen Fahrzeugluftreifen der eingangs genannten Art, bei welchem schulterseitige Profilrippen mit einem geringen Negativanteil vorhanden sind, derart zu gestalten, dass eine bessere Wasserableitung bzw. Wasserdrainage in Richtung zum Außenschulterbereich gewährleistet ist.

Gelöst wird die gestellte Aufgabe erfindungsgemäß dadurch, dass die Quereinschnitte an ihren Endabschnitten jeweils durch einen sich in Umfangsrichtung erstreckenden insgesamt bogenförmigen, mit der Bogenwölbung zur Umfangsrille weisenden, eine Breite von 0,60 mm bis 1,20 mm aufweisenden Einschnitt miteinander verbunden sind, wobei die in Umfangsrichtung aufeinander folgenden bogenförmigen Einschnitte derart in die Endabschnitte der Quereinschnitte einmünden, dass jeweils eines ihrer Enden gegenüber dem Ende des anschließenden bogenförmigen Einschnittes jeweils in die gleiche axiale Richtung und um bis zu 3,50 mm versetzt einmündet.

Die gemäß der Erfindung in den schulterseitigen Profilrippen vorgesehenen, in Umfangsrichtung verlaufenden bogenförmigen Einschnitte unterstützen auf nassem Untergrund durch ihre Krümmung ein Einfließen von Wasser in die Quereinschnitte und sorgen dadurch für eine bessere Wasserableitung über die Quereinschnitte in Richtung Schulteraußenseite. Vorteilhafterweise besitzt eine derart gestaltete Profilrippe einen geringen Negativanteil, wodurch die für gute Handlingeigenschaften wichtige Stabilität der schulterseitigen Profilrippe sichergestellt ist.

Bei einer bevorzugten Ausführung verlaufen gerade Linien, welche die Enden der Mittellinien der bogenförmigen Einschnitte an den Einmündungsstellen zu den Quereinschnitten miteinander verbinden, unter einem spitzen Winkel von 1° bis 5° zur Umfangsrichtung. Die bogenförmig verlaufenden Einschnitte sind somit gegenüber der Umfangsrichtung geringfügig geneigt, wodurch auf nassem Untergrund im Footprint ein Abführen von Wasser in die Quereinschnitte weiter unterstützt wird.

Bevorzugt weisen ferner gerade Linien, welche die Enden der Mittellinien der bogenförmigen Einschnitte miteinander verbinden, jeweils im Bereich der Bogenmitte ihren größten Normalabstand von 0,80 mm bis 2,00 mm zur Mittellinie des betreffenden bogenförmigen Einschnittes auf. Dieser Abstand bestimmt das Ausmaß der Krümmung der Bogenform der Einschnitte. Die Einschnitte sind daher geringfügig gekrümmt, wodurch ebenfalls eine gute Wasserableitung unterstützt wird.

Auch die Tiefe der bogenförmig verlaufenden Einschnitte ist für deren wasserableitende Wirkung von Bedeutung. Diesbezüglich ist es vorteilhaft, wenn die bogenförmig verlaufenden Einschnitte eine Tiefe von 1,00 mm bis 3,50 mm aufweisen.

Bevorzugt weisen ferner die Quereinschnitte zumindest abschnittsweise eine Tiefe von bis zu 85 % der Profiltiefe auf. Eine relativ große Tiefe der Quereinschnitte ist für die Wasserableitung aus dem Footprint Richtung Reifenschulter von Vorteil. Die Quereinschnitte weisen jedoch bei einer bevorzugten Ausführung auch Abschnitte mit einer geringeren Tiefe, beispielsweise einer Tiefe von 4,50 mm bis 6,00 mm, auf. Durch Abschnitte mit geringerer Tiefe wird die schulterseitige Profilrippe vorteilhaft stabilisiert.

Für eine ausgewogene Stabilität der Profilrippe ist es ferner von Vorteil, wenn sämtliche Quereinschnitte übereinstimmende Erstreckungslängen aufweisen, wobei jeweils das nicht versetzte Ende jedes bogenförmigen Einschnittes unmittelbar an das Ende eines Quereinschnittes anschließt.

Bevorzugt beträgt ferner der gegenseitige Abstand der Enden von in einen Querschnitt einmündenden und in Umfangsrichtung aufeinanderfolgenden bogenförmigen Einschnitte mindestens 1,50 mm.

Bei einer weiteren bevorzugten Ausführung münden die Quereinschnitte laufstreifenrandseitig und innerhalb der Bodenaufstandsfläche in Querrillen, welche innerhalb der Bodenaufstandsfläche eine Breite von 2,00 mm bis 5,00 mm und eine in die axiale Richtung projizierte Erstreckungslänge von 15 % bis 40 %, insbesondere bis 30 %, der axialen Breite der Profilrippe aufweisen. Die Querrillen sorgen für eine weitere Verbesserung des Abflusses von Wasser aus der Bodenaufstandsfläche in Richtung Reifenschulter.

Bevorzugt setzen sich die Quereinschnitte aus mehreren, insbesondere aus bis zu drei, insbesondere gerade verlaufenden Abschnitten zusammen, die miteinander stumpfe Winkel einschließen. Diese Maßnahme ist für die Stabilisierung der Profilrippe von Vorteil. Bei einer weiteren, alternativen Ausführung verlaufen die Quereinschnitte gerade.

Gemäß einer weiteren Ausgestaltung weisen die Quereinschnitte in Umfangsrichtung einen gegenseitigen Abstand von 25,00 mm bis 65,00 mm auf. Somit kann entweder in jedem Pitch der Profilierung des Laufstreifens oder in jedem zweiten Pitch je ein Quereinschnitt ausgebildet sein.

Sind die Quereinschnitte im Laufstreifen bzw. in der schulterseitigen Profilrippe unter größeren gegenseitigen Abständen zueinander angeordnet, so ist es von Vorteil, wenn innerhalb der Bodenaufstandsfläche im mittleren Bereich zwischen den in Umfangsrichtung aufeinanderfolgenden Quereinschnitten jeweils zumindest ein weiterer Einschnitt vorzugsweise parallel zu den Quereinschnitten verläuft, welcher in einem Abstand von 2,00 mm bis 6,00 mm vor dem bogenförmigen Einschnitt endet und zumindest bis zum seitlichen Laufstreifenrand reicht. Diese zusätzlichen Einschnitte unterstützen ebenfalls eine Ableitung von Wasser in Richtung Reifenschulter ohne die Stabilität der Profilrippe zu beeinflussen.

Als weitere, für eine gute Stabilität der schulterseitigen Profilrippe vorteilhafte Maßnahme ist zwischen den bogenförmigen Einschnitten und der Umfangsrille ein unstrukturierter Profilrippenstreifen vorhanden, welcher eine Breite von 15 % bis 35 % der Breite der Profilrippe aufweist. Diese Breite wird als der kürzeste axiale Abstand zwischen den bogenförmigen Einschnitten und der Umfangsrille bzw. deren Rillenkante an der Profiloberfläche ermittelt.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht (Abwicklung in die Ebene) eines schulterseitigen Umfangsabschnittes eines Laufstreifens eines Fahrzeugluftreifens und
Fig. 2 einen vergrößerten Ausschnitt aus Fig. 1.

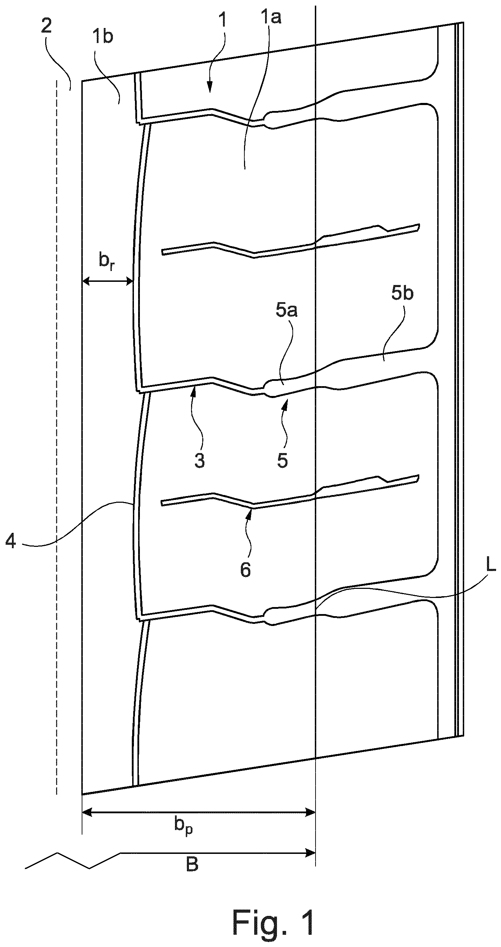

Fig. 1 zeigt einen Umfangsabschnitt einer schulterseitig verlaufenden Profilrippe 1 eines Laufstreifens eines Fahrzeugluftreifens in Radialbauart, insbesondere für Personenkraftwagen, Vans oder Light-Trucks. Die Profilrippe 1 ist durch eine in Umfangsrichtung umlaufende, in Fig. 1 angedeutete und in der vorgesehenen maximalen Profiltiefe ausgeführte Umfangsrille 2 in Richtung zur Laufstreifenmitte von weiteren Profilstrukturen des Laufstreifens, beispielsweise Blockreihen oder weiteren Profilrippen, getrennt. Bei der zweiten, nicht gezeigten Reifenschulter ist vorzugsweise eine zur Profilrippe 1 analoge bzw. gleich gestaltete Profilrippe vorgesehen.

In Fig. 1 kennzeichnet die Linie L den einen seitlichen Rand der Bodenaufstandsfläche bzw. des bodenberührenden Teils des Laufstreifens. Die Bodenaufstandsfläche weist eine Breite B (in Fig. 1 angedeutet) auf und entspricht dem statisch ermittelten Footprint gemäß E.T.R.T.O.- Standards, Last bei 70 % der maximalen Tragfähigkeit bei einem Innendruck von 85 %, wobei der Reifen auf einer Normfelge montiert ist. Die schulterseitige Profilrippe 1 befindet sich daher zum Teil innerhalb der Bodenaufstandsfläche und zum Teil, in der Schulterrundung des Reifens, außerhalb der Bodenaufstandsfläche. Der bodenberührende Teil der Profilrippe 1 weist eine Breite bₚ von 20 % bis 30 % der Breite B auf.

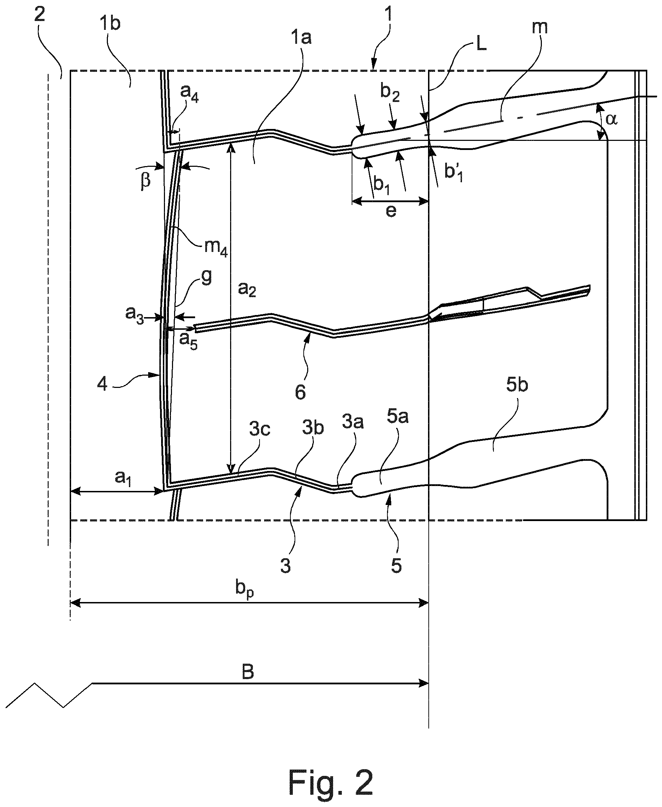

Innerhalb des bodenberührenden Teils weist die Profilrippe 1 durch Quereinschnitte 3, bogenförmig verlaufende Einschnitte 4 und Querrillen 5 gebildete blockartige Rippenelemente 1a auf, die in Umfangsrichtung aneinander anschließen. Wie insbesondere Fig. 2 zeigt, weist jede Querrille 5 einen innerhalb der Bodenaufstandsfläche verlaufenden Querrillenabschnitt 5a und einen außerhalb der Bodenaufstandsfläche verlaufenden, schulterseitig auslaufenden Querrillenabschnitt 5b auf. Jeder Querrillenabschnitt 5a erstreckt sich in Draufsicht auf den Laufstreifen gerade oder im Wesentlichen gerade und unter einem Winkel α von 0° bis 30°, insbesondere von 5° bis 20°, zur axialen Richtung, wobei der Winkel α zwischen der Mittellinie m des Querrillenabschnittes 5a und der axialen Richtung ermittelt ist. Die in die axiale Richtung projizierte Erstreckungslänge e jedes Querrillenabschnittes 5a beträgt 15 % bis 40 %, insbesondere bis 30 %, der (größten) axialen Breite bₚ der Profilrippe 1. Jeder Querrillenabschnitt 3a ist derart gestaltet, dass er an der Laufstreifenperipherie im Bereich seiner Enden eine Breite bi bzw. bi' von insbesondere 2,5 mm bis 5,0 mm aufweist, wobei b₁ vorzugsweise b₁' entspricht. In Richtung zu seiner Mitte verjüngt sich jeder Querrillenabschnitt 5a und weist hier eine Breite b₂ auf, welche um 0,05 mm bis 0,50 mm, insbesondere bis zu 0,30 mm, geringer ist, als die kleinere der beiden Breiten bi und b₁', falls bi nicht bi' entspricht. Die Breite bi wird beim Beginn einer Rundung des laufstreifeninnenseitigen Endes jedes Querrillenabschnittes 5a ermittelt, die Breite b_{1'} am Schnittpunkt der Mittellinie m mit der Linie L, beide Breiten bi und bi' im rechten Winkel zur Mittellinie m. Die Querrillenabschnitte 5a weisen über den Großteil ihrer Erstreckung eine Tiefe auf, welche zumindest 30 % und insbesondere bis zu 85 % der Profiltiefe entspricht. Die somit nach dem Wirkprinzip einer Venturi-Düse im mittleren Bereich verengten Querrillenabschnitte 5a unterstützen auf nassem Untergrund eine gute Entwässerung der Profilrippe 1 in Richtung zur Laufstreifenaußenseite.

Jeder Quereinschnitt 3 schließt unmittelbar an das laufstreifeninnenseitige Ende jedes Querrillenabschnittes 5a an und setzt sich beim gezeigten Ausführungsbeispiel jeweils aus drei insbesondere gerade verlaufenden Abschnitten 3a, 3b und 3c zusammen, welche miteinander jeweils einen stumpfen Winkel von insbesondere 160° bis 185° einschließen. Die Quereinschnitte 3 weisen insbesondere Abschnitte mit einer Tiefe von 80% bis zu 85% der Profitiefe und Abschnitte mit geringerer Tiefe auf und enden innerhalb der Profilrippe 1 in einem in axialer Richtung ermittelten Abstand a₁ vor der Umfangsrille 2, wobei a₁ 15 % bis 35 % der Breite b_{P} der Profilrippe 1 beträgt. Die Erstreckungsrichtung der Quereinschnitte 3 stimmt vorzugsweise mit jener der Querrillen 5 überein. Die Quereinschnitte 3 weisen in Umfangsrichtung vorzugsweise einen gegenseitigen Abstand a₂ von 25,00 mm bis 65,00 mm auf. Bei einer üblichen Gliederung des Laufstreifenprofils in Pitches (in Umfangsrichtung gleichartige Profilabschnitte mit beispielsweise drei bis fünf unterschiedlichen Umfangslängen, die ferner innerhalb einer Pitchfolge angeordnet sind) befindet sich bei einer bevorzugten Ausführung in jedem zweiten Pitch ein Quereinschnitt 3.

Die Enden bzw. die Endabschnitte der in Umfangsrichtung aufeinanderfolgenden Quereinschnitte 3 sind jeweils durch einen insgesamt bogenförmig verlaufenden Einschnitt 4 miteinander verbunden, wobei die Wölbung der Bogenform zur Umfangsrille 2 weist. Die bogenförmig verlaufenden Einschnitte 4 weisen eine vorzugsweise konstante Tiefe von insbesondere 1,0 mm bis 3,5 mm auf. Gerade Linien g, welche die Endstellen der Mittellinien m₄ der bogenförmigen Einschnitte 4 an den Mündungsstellen zu den Quereinschnitten 3 miteinander verbinden, verlaufen unter einem spitzen Winkel β von 1° bis 5° zur Umfangsrichtung mit einer Neigung nach außen, zur Reifenschulter. Die Linien g weisen jeweils im Bereich der Bogenmitte ihren größten Normalabstand a₂ zur Mittellinie des betreffenden Einschnittes 4 auf. Der Abstand a₂ beträgt 0,80 mm bis 2,00 mm und bestimmt daher, je nach seiner Größe, die Krümmung der Bogenform des Einschnittes 4. Zwischen den Einschnitten 4 und der Umfangsrille 2 verbleibt ein unstrukturierter Profilrippenstreifen 1b mit einer Breite bᵣ - kürzester axialer Abstand zwischen den bogenförmig verlaufenden Einschnitten 4 und der Umfangsrille 2 bzw. deren Rillenkante an der Profiloberfläche (Fig. 1) - welcher 15 % bis 35 % der Breite bₚ der Profilrippe 1 entspricht.

Gemäß einer bevorzugten Ausführung besitzen sämtliche Quereinschnitte 3 gleiche Erstreckungslängen und es schließt das eine Ende jedes bogenförmigen Quereinschnittes 4 an das Ende eines Einschnittes 3 an, das zweite Ende des bogenförmigen Einschnittes 4 mündet in den in Umfangsrichtung folgenden Einschnitt 3 in einem Abstand a₄ vom Ende dieses Quereinschnittes 3 versetzt, wobei an diesem Ende des Quereinschnittes 3 der in Umfangsrichtung nächste bogenförmige Einschnitt 4 anschließt. Der Abstand a₄ beträgt 1,50 mm bis 3,50 mm und wird zwischen den Mittellinien m₄ der Einschnitte 4 ermittelt.

Im mittleren Bereich der blockartigen Rippenelemente 1a ist je ein weiterer Einschnitt 6 angeordnet. Jeder Einschnitt 6 verläuft insbesondere und im Wesentlichen parallel zu den Quereinschnitten 3 und den Querrillen 5 und endet in einem Abstand a₅ vor dem bogenförmigen Einschnitt 4, wobei der Abstand a₅ 2,00 mm bis 6,00 mm beträgt. Der Einschnitt 6 verläuft bis zum seitlichen Rand L der Bodenaufstandsfläche, in Fortsetzung des Einschnittes 6 verläuft an der Reifenschulter beispielsweise eine flache Rille.

### Bezugsziffernliste

- 1: Profilrippe
- 1a: blockartiges Element
- 1b: Profilrippenstreifen
- 2: Umfangsrille
- 3: Quereinschnitt
- 3a, 3b, 3c: Abschnitt
- 4: bogenförmiger Einschnitt
- 5: Querrille
- 5a, 5b: Querrillenabschnitt
- 6: Einschnitt
- a₁, a₂, a₃, a₄, a₅: Abstand
- α, β: Winkel
- B: Breite
- b₁, b₁', b₂: Breite
- bₚ: Breite der Profilrippe
- bᵣ: Breite Profilrippenstreifen
- e: Erstreckungslänge
- g: gerade Linie
- L: Linie
- m: Mittellinie
- m₄: Mittellinie

## Patentansprüche

1. Fahrzeugluftreifen in Radialbauart mit einem Laufstreifen mit zumindest einer schulterseitigen, von einer Umfangsrille (2) begrenzten schulterseitigen Profilrippe (1), welche innerhalb der Bodenaufstandsfläche eine Breite (bₚ) besitzt und in welcher parallel zueinander verlaufende, eine Breite von 0,60 mm bis 1,20 mm aufweisende Quereinschnitte (3) angeordnet sind, welche sich unter einem Winkel von höchstens 30° zur axialen Richtung erstrecken und laufstreifeninnenseitig innerhalb der Profilrippe (1) in einem Abstand (a₁) vor der Umfangsrille (2), welcher Abstand (a₁) 15 % bis 35% der Breite (bₚ) der Profilrippe (1) beträgt, enden,
**dadurch gekennzeichnet,**
**dass** die Quereinschnitte (3) an ihren Endabschnitten jeweils durch einen sich in Umfangsrichtung erstreckenden insgesamt bogenförmigen, mit der Bogenwölbung zur Umfangsrille (2) weisenden, eine Breite von 0,60 mm bis 1,20 mm aufweisenden Einschnitt (4) miteinander verbunden sind, wobei die in Umfangsrichtung aufeinander folgenden bogenförmigen Einschnitte (4) derart in die Endabschnitte der Quereinschnitte (3) einmünden, dass jeweils eines ihrer Enden gegenüber dem Ende des anschließenden bogenförmigen Einschnittes (4) jeweils in die gleiche axiale Richtung und unter einem Abstand (a₄) von bis zu 3,50 mm versetzt einmündet.

2. Fahrzeugluftreifen nach Anspruch 1, **dadurch gekennzeichnet, dass** gerade Linien (g), welche die Enden der Mittellinien (m₄) der bogenförmigen Einschnitte (4) an den Einmündungsstellen zu den Quereinschnitten (3) miteinander verbinden, unter einem spitzen Winkel (β) von 1° bis 5° zur Umfangsrichtung verlaufen.

3. Fahrzeugluftreifen nach Anspruch 1 oder 2, **dadurch gekennzeichnet, dass** die gerade Linien (g), welche die Enden der Mittellinien (m₄) der bogenförmigen Einschnitte (4) miteinander verbinden, jeweils im Bereich der Bogenmitte ihren größten Normalabstand (a₃) von 0,80 mm bis 2,00 mm zur Mittellinie (m₄) des betreffenden bogenförmigen Einschnittes (4) aufweisen.

4. Fahrzeugluftreifen nach einem oder mehreren der Ansprüche 1 bis 3, **dadurch gekennzeichnet, dass** die bogenförmig verlaufenden Einschnitte (4) eine Tiefe von 1,0 mm bis 3,5 mm aufweisen.

5. Fahrzeugluftreifen nach einem oder mehreren der Ansprüche 1 bis 4, **dadurch gekennzeichnet, dass** die Quereinschnitte (3) zumindest abschnittsweise eine Tiefe von bis zu 85 % der Profiltiefe aufweisen.

6. Fahrzeugluftreifen nach einem oder mehreren der Ansprüche 1 bis 5, **dadurch gekennzeichnet, dass** sämtliche Quereinschnitte (3) übereinstimmende Erstreckungslängen aufweisen, wobei jeweils das nicht versetzte Ende jedes bogenförmigen Einschnittes (4) an das Ende eines Quereinschnittes (3) anschließt.

7. Fahrzeugluftreifen nach einem oder mehreren der Ansprüche 1 bis 6, **dadurch gekennzeichnet, dass** der gegenseitige Abstand (a₄) der Enden von in einen Quereinschnitt (3) einmündenden und in Umfangsrichtung aufeinander folgenden bogenförmigen Einschnitte (4) mindestens 1,50 mm beträgt.

8. Fahrzeugluftreifen nach einem oder mehreren der Ansprüche 1 bis 7, **dadurch gekennzeichnet, dass** die Quereinschnitte (3) in Querrillen (5) einmünden, welche innerhalb der Bodenaufstandsfläche eine Breite (b₁, b_{1'},b₂) von 2,00 mm bis 5,00 mm aufweisen und eine in die axiale Richtung projizierte Erstreckungslänge (e) von 15 % bis 40 %, insbesondere bis 30 %, der axialen Breite (bₚ) der Profilrippe (1) aufweisen.

9. Fahrzeugluftreifen nach einem oder mehreren der Ansprüche 1 bis 8, **dadurch gekennzeichnet, dass** sich die Quereinschnitte (3) aus mehreren, insbesondere aus bis zu drei, insbesondere gerade verlaufenden Abschnitten (3a, 3b, 3c) zusammensetzen, die miteinander stumpfe Winkel einschließen.

10. Fahrzeugluftreifen nach einem oder mehreren der Ansprüche 1 bis 8, **dadurch gekennzeichnet, dass** die Quereinschnitte (3) gerade verlaufen.

11. Fahrzeugluftreifen nach einem oder mehreren der Ansprüche 1 bis 10, **dadurch gekennzeichnet, dass** die Quereinschnitte (3) in Umfangsrichtung einen gegenseitigen Abstand (a₂) von 25,00 mm bis 65,00 mm aufweisen.

12. Fahrzeugluftreifen nach einem oder mehreren der Ansprüche 1 bis 11, **dadurch gekennzeichnet, dass** innerhalb der Bodenaufstandsfläche im mittleren Bereich zwischen den in Umfangsrichtung aufeinanderfolgenden Quereinschnitten (3) jeweils zumindest ein weiterer Einschnitt (6) vorzugsweise parallel zu den Quereinschnitten (3) verläuft, welcher in einem Abstand (a₅) von 2,00 mm bis 6,00 mm vor dem bogenförmigen Einschnitt (4) endet und zumindest bis zum seitlichen Laufstreifenrand (L) reicht.

13. Fahrzeugluftreifen nach einem oder mehreren der Ansprüche 1 bis 12, **dadurch gekennzeichnet, dass** zwischen den bogenförmigen Einschnitten (4) und der Umfangsrille (2) ein unstrukturierter Profilrippenstreifen (1b) vorhanden ist, welcher eine Breite (bᵣ), die als der kürzeste axiale Abstand zwischen den bogenförmigen Einschnitten (3) und der Umfangsrille (6) bzw. deren Rillenkante an der Profiloberfläche ermittelt wird, von 15 % bis 35 % der Breite (bₚ) der Profilrippe (1) aufweist.

## Claims

1. Pneumatic tyre of radial construction, having a tread with at least one shoulder-proximal profile rib (1) which is delimited by a circumferential groove (2), which within the ground contact area possesses a width (bₚ) and in which are disposed transverse sipes (3) which run parallel to one another, which have a width of 0.60 mm to 1.20 mm, which extend at an angle of at most 30° in relation to the axial direction and which on the inside of the tread within the profile rib (1) terminate at a spacing (a₁) ahead of the circumferential groove (2), said spacing (a₁) being 15% to 35% of the width (bₚ) of the profile rib (1),
**characterized**
**in that** the transverse sipes (3) at the end portions thereof are in each case connected to one another by a sipe (4) which extends in the circumferential direction, which is overall arcuate, which by way of the arc curvature points towards the circumferential groove (2) and which has a width of 0.60 mm to 1.20 mm, wherein the arcuate sipes (4) sequenced in the circumferential direction open into the end portions of the transverse sipes (3) in such a manner that in each case one of the ends of said arcuate sipes (4) in relation to the end of the adjoining arcuate sipe (4) opens out in each case in the same axial direction and so as to be offset by a spacing (a₄) of up to 3.50 mm.

2. Pneumatic tyre according to Claim 1, **characterized in that** straight lines (g), which connect to one another the ends of the centrelines (m₄) of the arcuate sipes (4) at the junctions with the transverse sipes (3), run at an acute angle (β) of 1° to 5° in relation to the circumferential direction.

3. Pneumatic tyre according to Claim 1 or 2, **characterized in that** the straight lines (g), which connect to one another the ends of the centrelines (m₄) of the arcuate sipes (4), have in each case their largest normal spacing (a₃) of 0.80 mm to 2.00 mm from the centreline (m₄) of the respective arcuate sipe (4) in the region of the centre of the arc.

4. Pneumatic tyre according to one or more of Claims 1 to 3, **characterized in that** the sipes (4) running in an arcuate manner have a depth of 1.0 mm to 3.5 mm.

5. Pneumatic tyre according to one or more of Claims 1 to 4, **characterized in that** the transverse sipes (3) at least in portions have a depth of up to 85% of the profile depth.

6. Pneumatic tyre according to one or more of Claims 1 to 5, **characterized in that** all of the transverse sipes (3) have identical lengths of extent, wherein that respective end of each arcuate sipe (4) that is not offset adjoins the end of a transverse sipe (3).

7. Pneumatic tyre according to one or more of Claims 1 to 6, **characterized in that** the mutual spacing (a₄) of the ends of arcuate sipes (4) that open into a transverse sipe (3) and are sequenced in the circumferential direction is at least 1.50 mm.

8. Pneumatic tyre according to one or more of Claims 1 to 7, **characterized in that** the transverse sipes (3) open into transverse grooves (5) which within the ground contact area have a width (b₁, b_{1'}, b₂) of 2.00 mm to 5.00 mm and which have a length of extent (e), projected in the axial direction, of 15% to 40%, in particular to 30%, of the axial width (bₚ) of the profile rib (1).

9. Pneumatic tyre according to one or more of Claims 1 to 8, **characterized in that** the transverse sipes (3) are made up of a plurality of, in particular of up to three, portions (3a, 3b, 3c) which in particular run straight and which conjointly include obtuse angles.

10. Pneumatic tyre according to one or more of Clams 1 to 8, **characterized in that** the transverse sipes (3) run straight.

11. Pneumatic tyre according to one or more of Claims 1 to 10, **characterized in that** the transverse sipes (3) in the circumferential direction have a mutual spacing (a₂) of 25.00 mm to 65.00 mm.

12. Pneumatic tyre according to one or more of Claims 1 to 11, **characterized in that** at least one further sipe (6) runs within the ground contact area in the central region between the transverse sipes (3) sequenced in the circumferential direction in each case preferably parallel to the transverse sipes (3), said further sipe (6) terminating at a spacing (a₅) of 2.00 mm to 6.00 mm ahead of the arcuate sipe (4) and reaching at least up to the lateral tread periphery (L).

13. Pneumatic tyre according to one or more of Claims 1 to 12, **characterized in that** present between the arcuate sipes (4) and the circumferential groove (2) is a non-structured profile rib strip (1b) which has a width (bᵣ) of 15% to 35% of the width (bₚ) of the profile rib (1), said width (bᵣ) being determined as the shortest axial spacing between the arcuate sipes (3) and the circumferential groove (6), or the groove edge of the latter on the profile surface.

## Revendications

1. Pneumatique de véhicule de construction radiale avec une bande de roulement avec au moins une nervure profilée (1) côté épaulement, délimitée par une rainure périphérique (2), qui possède une largeur (bₚ) à l'intérieur de la surface de contact avec le sol et dans laquelle sont agencées des entailles transversales (3) s'étendant parallèlement les unes aux autres, présentant une largeur de 0,60 mm à 1,20 mm, qui s'étendent selon un angle d'au plus 30° par rapport à la direction axiale et se terminent, du côté intérieur de la bande de roulement, à l'intérieur de la nervure profilée (1), à une distance (a₁) avant la rainure périphérique (2), laquelle distance (a₁) représentant 15 % à 35 % de la largeur (bₚ) de la nervure profilée (1),
**caractérisé en ce que**
les entailles transversales (3) sont reliées entre elles au niveau de leurs sections d'extrémité respectivement par une entaille (4) s'étendant dans la direction périphérique, globalement en forme d'arc, avec le bombement de l'arc dirigé vers la rainure périphérique (2), présentant une largeur de 0,60 mm à 1,20 mm, les entailles en forme d'arc (4) successives dans la direction périphérique débouchant dans les sections d'extrémité des entailles transversales (3) de telle sorte que l'une de leurs extrémités débouche respectivement dans la même direction axiale et avec un décalage d'une distance (a₄) de jusqu'à 3,50 mm par rapport à l'extrémité de l'entaille en forme d'arc (4) suivante.

2. Pneumatique pour véhicule selon la revendication 1, **caractérisé en ce que** des lignes droites (g), qui relient entre elles les extrémités des lignes centrales (m₄) des entailles en forme d'arc (4) au niveau des points d'embouchure vers les entailles transversales (3), s'étendent selon un angle aigu (β) de 1° à 5° par rapport à la direction périphérique.

3. Pneumatique pour véhicule selon la revendication 1 ou 2, **caractérisé en ce que** les lignes droites (g), qui relient entre elles les extrémités des lignes centrales (m₄) des entailles en forme d'arc (4), présentent chacune, dans la zone du centre de l'arc, leur distance normale maximale (a₃) de 0,80 mm à 2,00 mm par rapport à la ligne centrale (m₄) de l'entaille en forme d'arc (4) concernée.

4. Pneumatique pour véhicule selon une ou plusieurs des revendications 1 à 3, **caractérisé en ce que** les entailles (4) s'étendant en forme d'arc présentent une profondeur de 1,0 mm à 3,5 mm.

5. Pneumatique pour véhicule selon une ou plusieurs des revendications 1 à 4, **caractérisé en ce que** les entailles transversales (3) présentent au moins par sections une profondeur de jusqu'à 85 % de la profondeur du profilé.

6. Pneumatique pour véhicule selon une ou plusieurs des revendications 1 à 5, **caractérisé en ce que** toutes les entailles transversales (3) présentent des longueurs d'extension concordantes, l'extrémité non décalée de chaque entaille en forme d'arc (4) étant à chaque fois raccordée à l'extrémité d'une entaille transversale (3).

7. Pneumatique pour véhicule selon une ou plusieurs des revendications 1 à 6, **caractérisé en ce que** la distance mutuelle (a₄) des extrémités d'entailles en forme d'arc (4) débouchant dans une entaille transversale (3) et successives dans la direction périphérique est d'au moins 1,50 mm.

8. Pneumatique pour véhicule selon une ou plusieurs des revendications 1 à 7, **caractérisé en ce que** les entailles transversales (3) débouchent dans des rainures transversales (5) qui présentent, à l'intérieur de la surface de contact avec le sol, une largeur (b₁, b_{1'}, b₂) de 2,00 mm à 5,00 mm et une longueur d'extension (e) projetée dans la direction axiale de 15 % à 40 %, notamment jusqu'à 30 %, de la largeur axiale (bₚ) de la nervure profilée (1).

9. Pneumatique pour véhicule selon une ou plusieurs des revendications 1 à 8, **caractérisé en ce que** les entailles transversales (3) se composent de plusieurs, notamment jusqu'à trois sections (3a, 3b, 3c), notamment droites, qui forment entre elles des angles obtus.

10. Pneumatique pour véhicule selon une ou plusieurs des revendications 1 à 8, **caractérisé en ce que** les entailles transversales (3) sont droites.

11. Pneumatique pour véhicule selon une ou plusieurs des revendications 1 à 10, **caractérisé en ce que** les entailles transversales (3) présentent dans la direction périphérique une distance mutuelle (a₂) de 25,00 mm à 65,00 mm.

12. Pneumatique pour véhicule selon une ou plusieurs des revendications 1 à 11, **caractérisé en ce qu'**à l'intérieur de la surface de contact avec le sol, dans la zone centrale entre les entailles transversales (3) successives dans la direction périphérique, s'étend respectivement au moins une autre entaille (6), de préférence parallèle aux entailles transversales (3), qui se termine à une distance (a₅) de 2,00 mm à 6,00 mm avant l'entaille en forme d'arc (4) et s'étend au moins jusqu'au bord latéral (L) de la bande de roulement.

13. Pneumatique de véhicule selon une ou plusieurs des revendications 1 à 12, **caractérisé en ce qu'**entre les entailles en forme d'arc (4) et la rainure périphérique (2), une bande de nervure profilée non structurée (1b) est présente, qui présente une largeur (bᵣ) qui est déterminée comme la distance axiale la plus courte entre les entailles en forme d'arc (3) et la rainure périphérique (6) ou son bord de rainure au niveau de la surface de profilé, de 15 % à 35 % de la largeur (bₚ) de la nervure profilée (1).
